# EUROPÄISCHE PATENTSCHRIFT

(11) **EP 3 356 179 B1**
(45) Veröffentlichungstag und Bekanntmachung des Hinweises auf die Patenterteilung: **20.11.2019**
(21) Anmeldenummer: 16793735.8
(22) Anmeldetag: 29.09.2016
(51) Int. Cl.: B60N 2/75, B60N 2/90, F16F 1/37

(54) **ARMLEHNE FÜR EINEN SITZ SOWIE SITZ MIT ARMLEHNE**
ARMREST FOR A SEAT AND SEAT HAVING AN ARMREST
ACCOUDOIR POUR SIÈGE ET SIÈGE POURVU D'UN ACCOUDOIR

(30) Priorität: 30.09.2015 DE 102015012632
(43) Veröffentlichungstag der Anmeldung: 08.08.2018
(73) Patentinhaber: GRAMMER AG, 92224 Amberg (DE)
(72) Erfinder: KELLER, Hubert, 92245 Kümmersbruck (DE); HIMMELHUBER, Erwin, 92237 Sulzbach-Rosenberg (DE)
(74) Vertreter: Roche, von Westernhagen & Ehresmann
(86) Internationale Anmeldenummer: PCT/DE2016/000358
(87) Internationale Veröffentlichungsnummer: WO 2017/054794

(56) Entgegenhaltungen:
- DE-A1-102011 107 248
- DE-A1-102012 006 773
- DE-A1-102012 009 578

## Beschreibung

Die Erfindung betrifft zunächst eine Armlehne für einen Sitz, insbesondere für einen Fahrzeugsitz.

Eine solche Armlehne ist aus offenkundiger Vorbenutzung bekannt. Sie umfasst ein Armauflageteil, welches um eine Schwenkachse schwenkbar ist. Die Schwenkachse kann z.B. der Fahrzeugstruktur oder dem Fahrzeugsitz zugeordnet sein. Das Armauflageteil ist in unterschiedlichen Positionen mittels einer Verriegelungsvorrichtung arretierbar. Die Verriegelungsvorrichtung umfasst erste, dem Armauflageteil zugeordnete Arretiermittel sowie zweite, an einer Struktur des Fahrzeugs angeordnete Arretiermittel.

Eine Armlehne ist auch aus der DE-A-10 2012 009578 bekannt. Die Armlehne umfasst ein Armauflageteil, welches um eine erste Schwenkachse schwenkbar an einem Grundteil befestigt ist. Die Armlehne umfasst eine Verriegelungsvorrichtung, mittels der das Armauflageteil in wenigstens einer Position verriegelbar ist. Die Verriegelungsvorrichtung weist wenigstens ein armauflageteilfestes erstes Riegelelement und mindestens ein grundteilfestes zweites Riegelelement auf. In einer Verriegelungsposition der Verriegelungsvorrichtung wird ein Schwenken des Armauflageteils verhindert und in einer Entriegelungsposition ist das Armauflageteil schwenkbar. Das erste Riegelelement ist einem um eine zweite Schwenkachse schwenkbaren Hebel zugeordnet und die zweite Schwenkachse weist einen Abstand von der ersten Schwenkachse auf.

Die Verriegelungsvorrichtung ist zwischen einer Riegelposition und einer Löseposition verstellbar. Die Verstellung in die Löseposition kann z.B. manuell erfolgen. Bei der Rückstellung in die Riegelposition geraten die ersten und zweiten Arretiermittel in Eingriff, wobei ein unerwünschtes Geräusch entsteht.

Es war Aufgabe der Erfindung eine Armlehne mit einer Verriegelung zu schaffen, die hinsichtlich der Geräuschentwicklung verbessert ist.

Die Aufgabe wurde gelöst durch eine Armlehne mit den Merkmalen des Anspruchs 1.

Die Armlehne umfasst eine um eine Schwenkachse schwenkbare Armauflage. Die Schwenkachse ist einer Struktur zugeordnet, zu welcher die Armauflage relativbewegbar ist. Z.B. ist die Schwenkachse eine Sitzstruktur oder einer Fahrzeugstruktur zugeordnet. Die Armauflage ist zwischen einer oberen Endposition und einer unteren Endposition schwenkbar. Die Armauflage kann in unterschiedliche Zwischenpositionen, zwischen der oberen Endposition und der unteren Endposition eingestellt werden.

Die Armlehne umfasst eine Verriegelung, mit welcher die Armauflage in unterschiedlichen Positionen verriegelbar ist. Die Verriegelung ist zwischen einer Riegelposition und einer Löseposition bewegbar. In der Riegelposition ist die Armauflage z.B. in wenigstens eine Schwenkrichtung nicht bewegbar. Z.B. ist die Armauflage in eine erste Schwenkrichtung frei bewegbar und in eine zweite Schwenkrichtung nicht bewegbar. Gemäß einer alternativen Ausführung ist die Armauflage z.B. in der Riegelposition der Verriegelung in beide Schwenkrichtungen unbewegbar. In der Löseposition kann die Armauflage bei beiden Ausführungsformen - z.B. innerhalb eines maximalen Schwenkbereichs - frei in beide Schwenkrichtungen geschwenkt werden.

Die Verriegelung umfasst erste Arretiermittel, die der Armauflage zugeordnet sind und zweite Arretiermittel, die einer Struktur zugeordnet sind. Die Struktur ist z.B. die Sitzstruktur oder die Fahrzeugstruktur. Die zweiten Arretiermittel können z.B. derselben Struktur, wie die Schwenkachse oder auch unterschiedlichen Strukturen zugeordnet sein. Die ersten Arretiermittel und die zweiten Arretiermittel stehen in der Riegelposition der Verriegelung in Eingriff und in einer Löseposition außer Eingriff. Die ersten Arretiermittel und die zweiten Arretiermittel sind z.B. von komplementären Strukturen gebildet, die in unterschiedlichen Relativpositionen der ersten und zweiten Arretiermittel in Eingriff bewegt werden können. Die ersten Arretiermittel und die zweiten Arretiermittel sind z.B. von zusammenwirkenden Verzahnungen gebildet, die lösbar in Eingriff bewegbar sind.

Die ersten Arretiermittel und / oder die zweiten Arretiermittel sind z.B. derart auf einer Kreisbahn um die Schwenkachse der Armauflage angeordnet, dass die zusammenwirkenden Arretiermittel in jeder Position der Armauflage eine annähernd gleiche Relativbewegung zwischen der Riegelposition und der Löseposition durchführen.

Die ersten und / oder oder die zweiten Arretiermittel sind z.B. einer zwischen der Riegelposition und der Löseposition bewegbaren Riegelvorrichtung zugeordnet. Die ersten und / oder zweiten Arretiermittel sind z.B. durch eine translatorische Bewegung oder eine rotatorische Bewegung oder eine gemischte Bewegung mit translatorischen und rotatorischen Anteilen zwischen der Riegelposition und der Löseposition bewegbar.

Die ersten Arretiermittel sind z.B. starr an der Armauflage befestigt. Die zweiten Arretiermittel sind in diesem Fall z.B. zwischen der Riegelposition und der Löseposition bewegbar. Die zweiten Arretiermittel bewegen sich dann in wenigstens einem Bereich der Bewegung gedämpft in die Riegelposition.

Gemäß einer Alternative sind die ersten Arretiermittel zwischen der Riegelposition und der Löseposition bewegbar und die zweiten Arretiermittel sind starr angeordnet. Die ersten Arretiermittel bewegen sich in diesem Fall in wenigstens einem Bereich der Bewegung gedämpft in die Riegelposition.

Gemäß einer weiteren Alternative sind die ersten Arretiermittel und die zweiten Arretiermittel zwischen der Riegelposition und der Löseposition bewegbar. Die ersten Arretiermittel und / oder die zweiten Arretiermittel bewegen sich dann in wenigstens einem Bereich der Bewegung gedämpft in die Riegelposition.

Wenigstens ein Teilbereich der Bewegung der Verriegelung zwischen der Löseposition und der Riegelposition erfolgt mittels einer Dämpfung gedämpft. D.h. die Relativbewegung der Arretiermittel erfolgt in wenigstens einem Teilbereich gedämpft. Z.B. wird die gesamte Bewegung zwischen der Löseposition und der Riegelposition mittels einer Dämpfung gedämpft. Gemäß einer Alternative werden ein oder mehrere Bereiche der Bewegung gedämpft und wenigstens ein anderer Bereich der Bewegung ist ungedämpft. Z.B. ist ein Teilbereich gedämpft, welcher das In-Eingriff-Bewegen der Arretiermittel einschließt. Z.B. kann ein Teilbereich gedämpft sein, welcher das In-Kontakt-Bewegen eines Anschlags der Armlehne mit einem Gegenanschlag der Struktur zur Begrenzung des Schwenkbereichs der Armauflage einschließt. Bei den vorgenannten Alternativen bewegen sich die Arretiermittel aufgrund der Dämpfung verlangsamt in Kontakt. Das dabei entstehende Geräusch ist in Bezug auf das ungedämpfte Aufeinandertreffen der Arretiermittel deutlich vermindert.

Die Bewegung der Verriegelung erfolgt in wenigstens eine Richtung gedämpft. Das bedeutet im Sinne der Erfindung, dass eine Dämpfung der Bewegung der Verriegelung von der Riegelposition in die Löseposition oder alternativ eine Dämpfung der Bewegung von der Löseposition in die Riegelposition oder alternativ eine Dämpfung der Bewegung von der Riegelposition in die Löseposition und von der Löseposition in die Riegelposition stattfindet.

Die Dämpfung kann z.B einen Lineardämpfer, einen Rotationsdämpfer oder einen viskoelastischen Schaum als Dämpfer umfassen.

Der Lineardämpfer umfasst z.B. eine translatorisch bewegbare Kolbenstange, die in Verbindung mit einem Arretiermittel steht und deren Bewegung in wenigstens eine Richtung gedämpft ist. Der Rotationsdämpfer umfasst z.B. ein rotierendes Element, dessen Bewegung in wenigstens eine Drehrichtung gedämpft erfolgt. Der viskoelastische Schaum bewegt sich gedämpft in seine verformte Position und / oder gedämpft in die Ausgangslage zurück. Zusätzlich hat der viskoelastische Schaum den Vorteil, dass er eine Federeigenschaft hat, so dass er bei seiner Bewegung in die Ausgangslage z.B. das Arretiermittel in die Riegelposition bewegen kann. Die Dämpfung kann z.B. mehre der oben erwähnten Dämpfer in Kombination umfassen.

Die ersten Arretiermittel oder die zweiten Arretiermittel sind z.B. an einem Hebel ausgebildet. Der Hebel ist z.B. zwischen der Löseposition und der Eingriffsposition schwenkbar. Der Hebel kann z.B. als zweiarmiger Hebel ausgebildet sein. Es ist dann z.B. möglich die Arretiermittel an einem der Hebelarme auszubilden. Der andere Hebelarm kann z.B. mit einer Rückstellvorrichtung oder mit der Dämpfung in Kontakt stehen.

Gemäß einer Ausgestaltung der Erfindung ist der Hebel von einer Rückstellvorrichtung in die Riegelposition belastet ist. Die Rückstellvorrichtung ist z.B. von einer Feder gebildet, welche den Hebel in die Riegelposition belastet. Anstelle einer Feder kommen aber auch andere Rückstellelemente in Betracht, wie z.B. hydraulische oder pneumatische Rückstellvorrichtungen.

Die Dämpfung steht z.B. zumindest in einem Bereich der Bewegung zwischen der Löseposition und der Riegelposition mit der Riegelvorrichtung in Kontakt. Die Dämpfung steht z.B. immer mit der Riegelvorrichtung in Kontakt. Gemäß einer alternativen Ausführung steht die Dämpfung in wenigstens einem Teilbereich der Bewegung der Riegelvorrichtung mit der Riegelvorrichtung in Kontakt. Dies kann z.B. einen Teilbereich der Bewegung einschließen in welchem die ersten Arretiermittel und die zweiten Arretiermittel ineinandergreifen. Z.B. steht die Dämpfung bei allen Alternativen mit einem Hebel der Riegelvorrichtung in Kontakt.

Wenn sich die ersten Arretiermittel und die zweiten Arretiermittel in Kontakt bewegen, wird z.B. zumindest in diesem Bewegungsbereich die Bewegung mittels einer Dämpfung gedämpft. Die Bewegung könnte aber auch in wenigstens einem Bereich vor dem In-Kontakt-Treten der ersten Arretiermittel und der zweiten Arretiermittel gedämpft erfolgen. Die Relativbewegung der Arretiermittel wurde dann schon vor dem Kontaktieren verlangsamt, so dass bei dem Aufeinandertreffen der ersten und zweiten Arretiermittel das Geräusch reduziert wird.

Einer Ausführungsform gemäß ist die Dämpfung z.B. von einer Rückstelleinrichtung in Kontakt mit der Riegelvorrichtung belastet. Auf diese Weise wird die Dämpfung in Kontakt mit den sich zwischen der Löseposition und der Riegelposition bewegenden Arretiermitteln gehalten. Z.B. kann ein Element der Dämpfung, z.B. eine Kolbenstange eines hydraulischen oder pneumatischen Dämpfungszylinders, in Kontakt mit der Riegelvorrichtung gehalten werden.

Die ersten Arretiermittel sind z.B. einem Hebelarm zugeordnet, welcher in zumindest einem Schwenkbereich der Armauflage mit der Armauflage schwenkverbunden ist. Der Hebelarm kann z.B. fest mit der Armauflage verbunden sein und bei allen Schwenkbewegungen der Armauflage zusammen mit dieser Schwenken. Gemäß einer Alternative kann der Hebelarm z.B. mit der Armauflage ein Gelenk bilden, so dass der Hebelarm in wenigstens einem Schwenkbereich der Armauflage mit dieser Schwenkverbunden ist und in wenigstens einem Schwenkbereich der Armauflage nicht mit dieser Schwenkverbunden ist, sich also relativ zu der Armauflage bewegt. Mit dem Hebelarm kann ferner eine Distanz überbrückt werden, so dass die Verriegelung nicht in unmittelbarer Nähe zu der Armauflage angeordnet sein muss.

Die Erfindung betrifft gemäß einem zweiten Aspekt einen Sitz mit einer Armlehne gemäß dem ersten Erfindungsaspekt.

Weitere Vorteile der Erfindung ergeben sich anhand der schematischen Darstellung eines in den Fig. dargestellten Ausführungsbeispiels. Es zeigen:

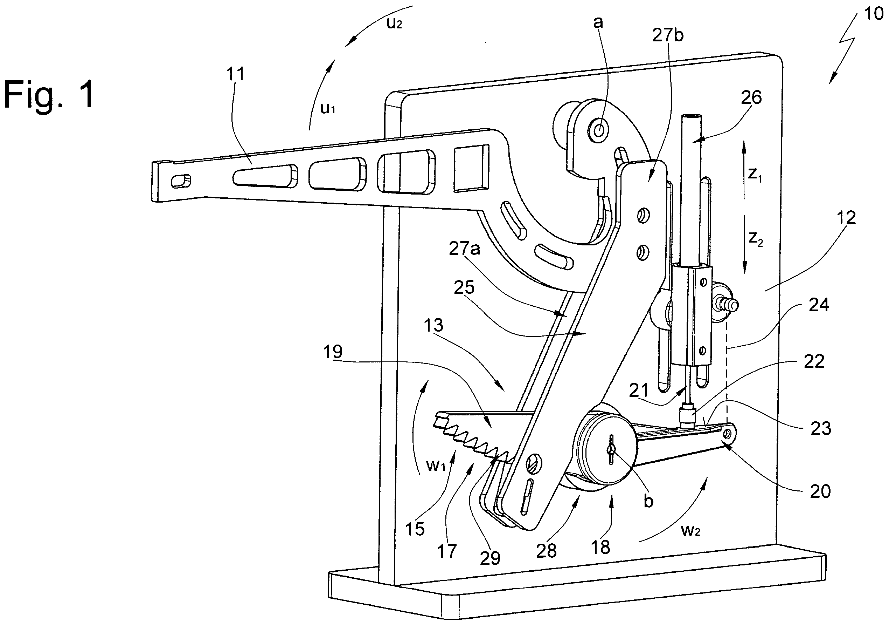

Fig. 1 eine perspektivische Darstellung der Armlehne, wobei das Armauflageteil in einer unteren Endposition und die Verriegelung in der Riegelposition angeordnet ist,
Fig. 2 eine Seitenansicht der Armlehne gemäß Fig. 1 in der unteren Endposition,
Fig. 3 eine Seitenansicht der Armlehne gemäß Fig. 2, wobei die Verriegelung in der Löseposition angeordnet ist,
Fig. 4 eine Seitenansicht der Armlehne gemäß Fig. 3, wobei die Verriegelung in der Löseposition angeordnet ist und die Armlehne etwas nach oben verschwenkt ist,
Fig. 5 eine Seitenansicht der Armlehne gemäß Fig. 4, wobei die Verriegelung sich in die Riegelposition bewegt,
Fig. 6 eine Seitenansicht der Armlehne gemäß Fig. 5, wobei die Verriegelung in der Riegelposition und die Armlehne in einer zweiten Gebrauchsposition angeordnet ist.

Eine Armlehne insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

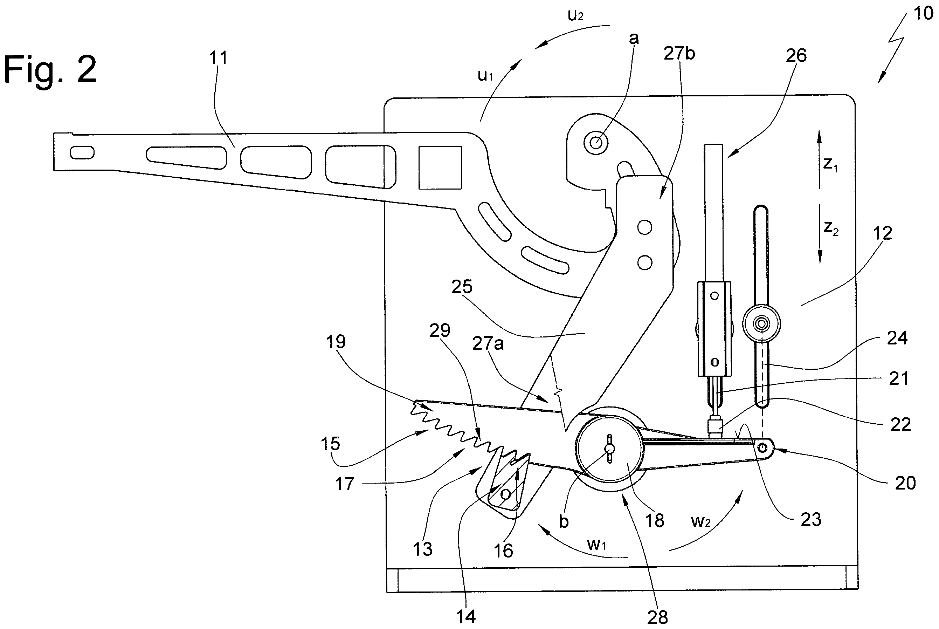

Die Armlehne 10 umfasst eine Armauflage 11, welche um eine Schwenkachse a zwischen einer nicht dargestellten oberen Endposition, in welcher die Armauflage 11 etwa vertikal angeordnet ist, und einer unteren Endposition, in welcher die Armauflage 11 etwa horizontal angeordnet ist, schwenkbar ist. Die obere Endposition und die untere Endposition können durch Anschläge definiert sein. Aus der in Fig. 2 dargestellten unteren Endposition kann die Armauflage 11 in Richtung u1 in die obere Endposition geschwenkt werden, die nicht dargestellt ist. Aus der oberen Endposition kann die Armauflage in Richtung u2 in die untere Endposition geschwenkt werden. Die Schwenkachse a ist an einer Struktur 12 befestigt, die z.B. eine Fahrzeugstruktur oder eine Sitzstruktur sein kann.

Die Armlehne 10 umfasst eine Verriegelung 13 mit dem Armlehnenkörper 11 zugeordneten ersten Arretiermitteln 14 und mit der Struktur 12 zugeordneten zweiten Arretiermitteln 15. Die ersten Arretiermittel 14 umfassen an der Armauflage 11 befestigte Zahnmittel 16, die bei dem Ausführungsbeispiel z.B. in Form von zwei Zähnen 29 ausgebildet sind. Die Zahnmittel 16 sind zwischen zwei Halteplatten 27a und 27b angeordnet, die an der Armauflage 11 befestigt sind.

Mit den ersten Zahnmitteln 16 wirken zweite Zahnmittel 17 als zweite Arretiermittel 15 zusammen. Die zweiten Zahnmittel sind in Form einer Verzahnung mit einer Vielzahl von Zähnen 29 an einem um eine Schwenkachse b schwenkbar gelagerten, zweiarmigen Hebel 18 ausgebildet. Die zweiten Arretiermittel 15 sind etwa auf einer Kreisbahn um die Schwenkachse a angeordnet. Auf diese Weise ist der Schwenkwinkel, den der Hebel 18 zwischen der Riegelposition und der Löseposition zurücklegt, in allen Verriegelungspositionen der Armauflage 11 etwa gleich. Der Hebel 18 ist Teil einer Riegelvorrichtung 28, welche im vorliegenden Ausführungsbeispiel die Bewegbarkeit der zweiten Arretiermittel 15 zwischen der Riegelposition und der Löseposition gewährleistet.

Der Hebel 18 ist von einer Rückstellkraft, die im vorliegenden Ausführungsbeispiel von einer Feder 24 bereitgestellt wird, in Richtung w2, in Richtung des Eingriffs der ersten Arretiermittel 14 mit den zweiten Arretiermitteln 15 belastet. Die Feder 24 ist lediglich schematisch durch eine gestrichelte Linie dargestellt. Gemäß einer alternativen Ausführung könnte z.B. anstelle der Feder 24 auch eine Drehfeder an der Schwenkachse b angeordnet sein, welche den Hebel 18 in Richtung w2 belastet.

Mit einer nicht dargestellten Betätigung kann die Verriegelung in die Löseposition verstellt werden. Im vorliegenden Ausführungsbeispiel erfolgt die Verstellung in die Löseposition, indem der Hebel 18 in Richtung w1 geschwenkt wird. Die Verriegelung kann z.B. als Form-Richt-Gesperre ausgebildet sein, so dass eine Bewegung der Armauflage 11 in Richtung u1 ohne eine Betätigung erfolgen kann, weil sich die Verriegelung automatisch in die Löseposition bewegt, wohingegen eine Bewegung in Richtung u2 nur möglich ist, wenn die Verriegelung mittels der Betätigung in die Löseposition verstellt wurde.

Die zweiten Arretiermittel 15 sind an einem ersten Hebelarm 19 des Hebels 18 angeordnet. Ein zweiter Hebelarm 20 steht mit einer Kolbenstange 21 in Kontakt, die Teil einer Dämpfung 26 ist. Die Kolbenstange 21 ist von einer Rückstellkraft in Richtung z2 in Kontakt mit dem zweiten Hebelarm 20 belastet. Ein Kontaktteil 22 der Kolbenstange 21 liegt an einer Oberseite 23 des zweiten Hebelarms 20 an. In Richtung z2 bewegt sich die Kolbenstange 21 ungedämpft. Bei einer Belastung der Kolbenstange in Richtung z1 bewegt sich die Kolbenstange 21 gedämpft in Richtung z1. Die Bewegung des Hebels 18 in Richtung w2 erfolgt daher gedämpft, weil bei dieser Bewegung die Kolbenstange in Richtung z1 bewegt wird.

Die Kolbenstange 21 ist Teil einer handelsüblichen Dämpfung. Alternativ zu einer nachfolgend beispielhaft beschriebenen Dämpfung 26 ist jede geeignete andere Dämpfung verwendbar.

Die Kolbenstange 21 ist z.B. mit einem Kolben verbunden, der in einem Zylinder bewegbar ist, und den Zylinderraum in zwei Kammern teilt. In dem Zylinder ist ein Fluid angeordnet. Bei der Bewegung des Kolbens in Richtung z1 kann lediglich ein begrenzter Volumenstrom des Fluids den Kolben passieren, und aus der ersten Kammer in die zweite Kammer strömen, wodurch die Bewegung des Kolbens gedämpft wird.

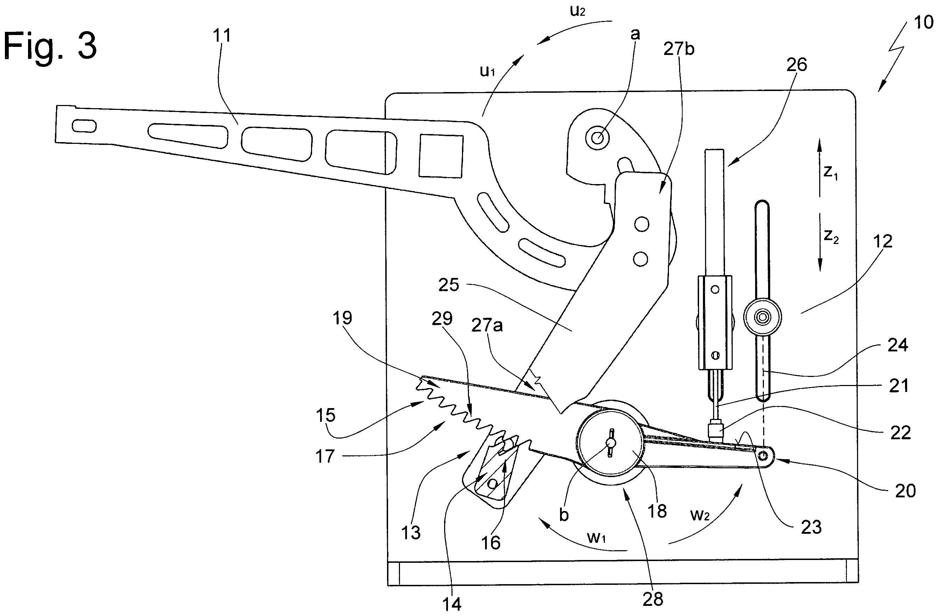

Nachfolgend wird die Funktion der Armlehne 10 beschrieben. Wenn die Armauflage 11 in Richtung u1 geschwenkt wird, bewegen sich auch die ersten Arretiermittel 14 in Richtung u1, weil sie mittels des Arms 25 mit der Armauflage 11 schwenkverbunden sind. Weil die ersten Zahnmittel 16 und die zweiten Zahnmittel 17 als Form-Richt-Gesperre ausgebildet sind, ist bei dem vorliegenden Ausführungsbeispiel eine Bewegung der Armauflage 11 in Richtung u1 ohne aktive Verstellung der Verriegelung 13 möglich. Bei einer Bewegung der Armauflage 11 in Richtung u1 wird die Verriegelung 13 automatisch in die Löseposition bewegt, indem der Hebel 18 aufgrund der Zahnform der Zahnmittel 16 und 17 sowie der Bewegungsrichtung der Armauflage 11 in Richtung w1 in die Löseposition schwenkt, wobei die ersten Arretiermittel 16 und die zweiten Arretiermittel 17 automatisch außer Eingriff geraten (siehe Fig. 3).

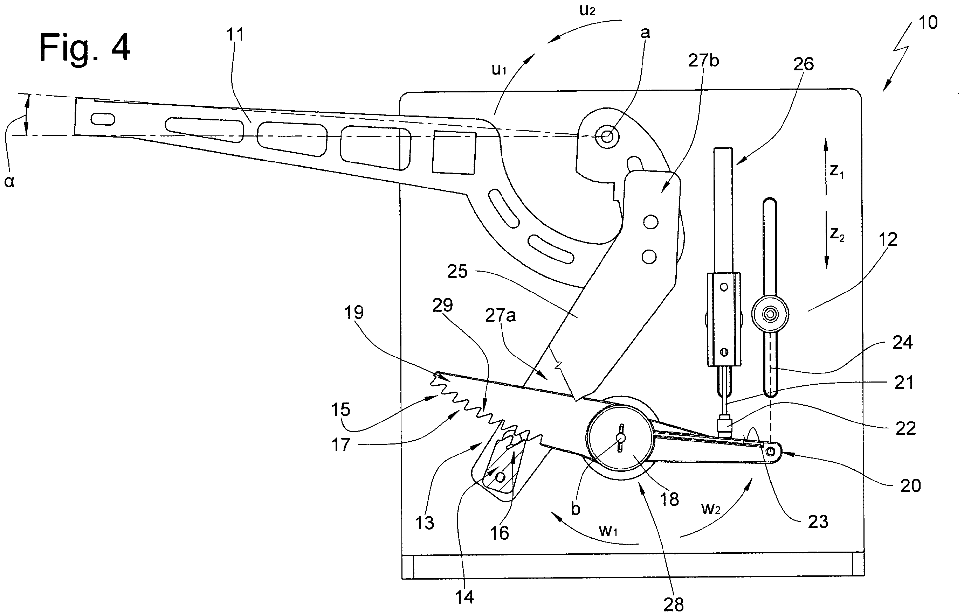

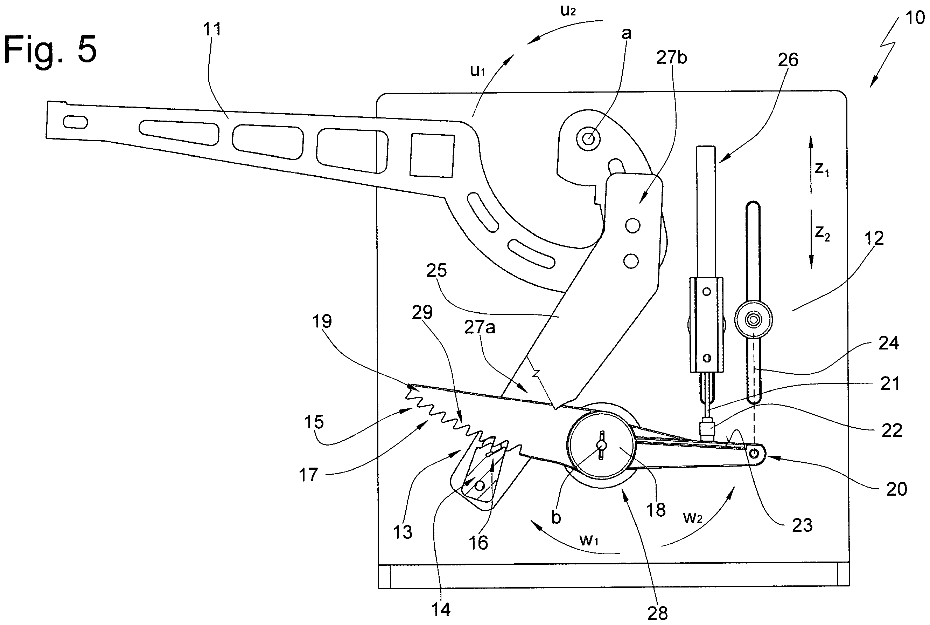

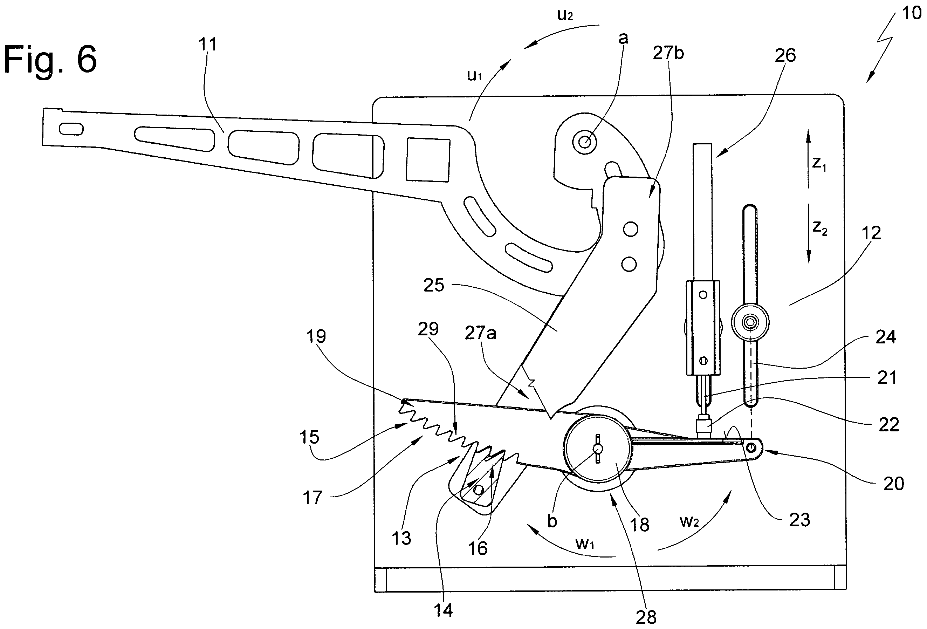

Wurde die Armauflage 11 um einen Winkel α (siehe Fig. 4) in die gewünschte Position geschwenkt, bewegt sich die Verriegelung 13 automatisch in die Riegelposition. Je nach der Größe des Winkels α ratschen die ersten Zahnmittel 16 über einen oder mehrere Zähne der zweiten Zahnmittel 17. Ist die Armauflage 11 in der gewünschten Position eingestellt, dreht sich der Hebel 18 aufgrund seiner Federbelastung in Richtung w2, wobei die ersten Arretiermittel 16 und die zweiten Arretiermittel 17 in Eingriff bewegt werden (siehe die Fig. 4, 5 und 6). Der zweite Hebelarm 20 bewegt bei seiner Rotation in Richtung w2 die Kolbenstange 21 in Richtung z1.

Die Bewegung des in Richtung w2 federbelasteten Hebels 18 von der Löseposition in die Riegelposition wird auf diese Weise von der Dämpfung 26 gedämpft, so dass sich die ersten Arretiermittel 16 und die zweiten Arretiermittel 17 nicht schlagartig, sondern gedämpft in Kontakt bewegen. Die Geräuschentstehung wird auf diese Weise erheblich reduziert.

Wenn die Armauflage 11 z.B. aus einer nach oben in Richtung u1 verschwenkten Position in Richtung u2 in Richtung der unteren Endposition geschwenkt werden soll, muss mit der nicht dargestellten Betätigung der Hebel 18 entgegen der Kraft der Feder 24 aktiv in Richtung w1 in die Löseposition geschwenkt werden, wobei sich die Arretiermittel 14 und 15 außer Eingriff bewegen. Die Kolbenstange 21 wird dabei von der oben erwähnten Rückstellkraft in Richtung z2 belastet, bewegt sich daher in Richtung z2 und wird auf diese Weise in Kontakt mit dem Hebelarm 20 gehalten. Die Armauflage 11 kann nun in Richtung u2 geschwenkt werden. Sobald die Kraft auf die Betätigung gelöst wird, bewegt sich die Verriegelung gedämpft in die Riegelposition, wie oben beschrieben.

Gemäß einer alternativen Ausführung der Armlehne 10 enthält die Verriegelung z.B. kein Form-Richt-Gesperre. Es ist dann mittels einer Betätigung eine aktive Verstellung der Verriegelung 13 in die Löseposition notwendig, um die Armauflage 11 in Richtung u1 oder in Richtung u2 zu schwenken. Sobald die Kraft auf die Betätigung gelöst wird, bewegt sich die Verriegelung gedämpft in die Riegelposition.

Gemäß einer weiteren, nicht dargestellten Alternative könnten die zweiten Arretiermittel 15 nicht an einem bewegbaren Hebel 18, sondern z.B. starr an der Struktur 12 ausgebildet sein. In diesem Fall sind z.B. die ersten Arretiermittel zwischen der Riegelposition und der Löseposition bewegbar. Die Dämpfung dämpft in diesem Fall die Bewegung der ersten Arretiermittel.

## Patentansprüche

1. Armlehne mit einer Armauflage (11), die um eine Schwenkachse (a) zwischen einer oberen Endposition und einer unteren Endposition schwenkbar ist, mit einer Verriegelung (13), die zwischen einer Riegelposition und einer Löseposition bewegbar ist, umfassend erste Arretiermittel (14), die der Armauflage (11) zugeordnet sind und zweite Arretiermittel (15), die einer ortsfesten Struktur (12) zugeordnet sind, wobei die ersten Arretiermittel (14) und die zweiten Arretiermittel (15) in einer Riegelposition der Verriegelung (13) in Eingriff stehen und in einer Löseposition außer Eingriff stehen, **dadurch gekennzeichnet, dass** wenigstens ein Teilbereich der Bewegung der Verriegelung (13) zwischen der Löseposition und der Riegelposition in wenigstens eine Richtung mittels einer Dämpfung (26) gedämpft erfolgt.

2. Armlehne nach Anspruch 1, **dadurch gekennzeichnet, dass** die Dämpfung (26) einen Lineardämpfer und / oder einen Rotationsdämpfer und / oder einen viskoelastischen Schaum umfasst.

3. Armlehne nach Anspruch 1, **dadurch gekennzeichnet, dass** die ersten Arretiermittel (14) und / oder die zweiten Arretiermittel (15) einer zwischen der Riegelposition und der Löseposition bewegbaren Riegelvorrichtung (28) zugeordnet sind.

4. Armlehne nach Anspruch 1, **dadurch gekennzeichnet, dass** die Riegelvorrichtung wenigstens ein Arretiermittel umfasst, welches translatorisch und / oder rotatorisch bewegbar ist.

5. Armlehne nach Anspruch 1, **dadurch gekennzeichnet, dass** wenigstens ein Arretiermittel (14, 15) von einer Rückstellvorrichtung in die Riegelposition belastet ist.

6. Armlehne nach Anspruch 1, **dadurch gekennzeichnet, dass** wenigstens einem der Arretiermittel (14, 15) ein viskoelastischer Schaum zugeordnet ist, welcher das Arretiermittel (14, 15) mittels einer Rückstellkraft in die Riegelposition belastet und das Arretiermittel (14, 15) bei der Bewegung von der Löseposition in die Riegelposition und / oder bei der Bewegung von der Riegelposition in die Löseposition dämpft.

7. Armlehne nach Anspruch 1, **dadurch gekennzeichnet, dass** die Dämpfung (26) mit der Riegelvorrichtung (28) in Kontakt steht.

8. Armlehne nach Anspruch 1, **dadurch gekennzeichnet, dass** die Dämpfung (26) von einer Rückstelleinrichtung in Kontakt mit der Riegelvorrichtung (28) belastet ist.

9. Armlehne nach Anspruch 1, **dadurch gekennzeichnet, dass** die ersten Arretiermittel (14) einem Hebelarm (25) eines Hebels (18) zugeordnet sind, welcher in zumindest einem Schwenkbereich der Armauflage (11) mit der Armauflage (11) schwenkverbunden ist.

10. Fahrzeugsitz mit einer Armlehne (10) gemäß einem der Ansprüche 1 bis 7.

## Claims

1. Armrest having an arm support (11), which is pivotable about a pivot axle (a) between an upper end position and a lower end position, having a latch (13), which is movable between a latching position and a release position, comprising first locking means (14) which are assigned to the arm support (11) and second locking means (15) which are assigned to a stationary structure (12), the first locking means (14) and the second locking means (15) being engaged in a latching position of the latch (13) and disengaged in a release position, **characterised in that** at least one sub-range of the movement of the latch (13) between the release position and the latching position is damped in at least one direction by means of a damping system (26).

2. Armrest according to claim 1, **characterised in that** the damping system (26) comprises a linear damper and/or a rotational damper and/or a viscoelastic foam.

3. Armrest according to claim 1, **characterised in that** the first locking means (14) and/or the second locking means (15) are assigned to a latching device (28) which is movable between the latching position and the release position.

4. Armrest according to claim 1, **characterised in that** the latching device comprises at least one locking means which is movable in translation and/or in rotation.

5. Armrest according to claim 1, **characterised in that** at least one locking means (14, 15) is loaded into the latching position by a resetting device.

6. Armrest according to claim 1, **characterised in that** a viscoelastic foam is assigned to at least one of the locking means (14, 15) and loads the locking means (14, 15) into the latching position with a resetting force and damps the locking means (14, 15) during the movement from the release position into the latching position and/or during the movement from the latching position into the release position.

7. Armrest according to claim 1, **characterised in that** the damping system (26) is in contact with the latching device (28).

8. Armrest according to claim 1, **characterised in that** the damping system (26) is loaded into contact with the latching device (28) by a resetting means.

9. Armrest according to claim 1, **characterised in that** the first locking means (14) are assigned to a lever arm (25) of a lever (18), which is in a pivot connection with the arm support (11) in at least one pivoting range of the arm support (11).

10. Vehicle seat comprising an armrest (10) according to any of claims 1 to 7.

## Revendications

1. Accoudoir comportant un support de bras (11) qui peut pivoter autour d'un axe de pivotement (a) entre une position d'extrémité supérieure et une position d'extrémité inférieure, un dispositif de verrouillage (13) qui est mobile entre une position de verrouillage et une position de libération, comprenant des premiers moyens de blocage (14) qui sont associés au support de bras (11) et des deuxièmes moyens de blocage (15) qui sont associés à une structure fixe (12), les premiers moyens de blocage (14) et les deuxièmes moyens de blocage (15) étant engagés dans une position de verrouillage du dispositif de verrouillage (13) et désengagés dans une position de libération, **caractérisé en ce qu'**au moins une partie du mouvement du dispositif de verrouillage (13) entre la position de libération et la position de verrouillage est effectuée de façon amortie dans au moins un sens au moyen d'un dispositif d'amortissement (26).

2. Accoudoir selon la revendication 1, **caractérisé en ce que** le dispositif d'amortissement (26) comporte un amortisseur linéaire et/ou un amortisseur rotatif et/ou une mousse viscoélastique.

3. Accoudoir selon la revendication 1, **caractérisé en ce que** les premiers moyens de blocage (14) et/ou les deuxièmes moyens de blocage (15) sont associés à un dispositif de verrouillage (28) mobile entre la position de verrouillage et la position de libération.

4. Accoudoir selon la revendication 1, **caractérisé en ce que** le dispositif de verrouillage comprend au moins un moyen de blocage lequel est mobile en translation et/ou en rotation.

5. Accoudoir selon la revendication 1, **caractérisé en ce qu'**au moins un moyen de blocage (14, 15) est contraint par un dispositif de rappel dans la position de verrouillage.

6. Accoudoir selon la revendication 1, **caractérisé en ce qu'**est associée à au moins un des moyens de blocage (14, 15) une mousse viscoélastique qui contraint le moyen de blocage (14, 15) au moyen d'une force de rappel dans la position de verrouillage, et amortit le moyen de blocage (14, 15) lors du mouvement de la position de libération dans la position de verrouillage et/ou lors du mouvement de la position de verrouillage dans la position de libération.

7. Accoudoir selon la revendication 1, **caractérisé en ce que** le dispositif d'amortissement (26) est en contact avec le dispositif de verrouillage (28).

8. Accoudoir selon la revendication 1, **caractérisé en ce que** le dispositif d'amortissement (26) est contraint par un dispositif de rappel en contact avec le dispositif de verrouillage (28).

9. Accoudoir selon la revendication 1, **caractérisé en ce que** les premiers moyens de blocage (14) sont associés à un bras de levier (25) d'un levier (18) qui est en liaison de pivotement dans au moins une zone de pivotement de l'accoudoir (11) avec l'accoudoir (11).

10. Siège de véhicule comportant un accoudoir (10) selon l'une des revendications 1 à 7.
